# EUROPEAN PATENT APPLICATION

(11) **EP 2 249 558 A1**
(43) Date of publication of application: **10.11.2010**
(21) Application number: 09168559.4
(22) Date of filing: 25.08.2009
(51) Int. Cl.: H04N 5/225, G06F 3/033, H04N 13/00

(54) **Digital image capturing device with stereo image display and touch functions**

(30) Priority: 06.05.2009 TW 98114953
(71) Applicant: J Touch Corporation, Taoyuan County, Taiwan (CN)
(72) Inventor: Yeh, Yu-Chou, Taoyuan County (TW)
(74) Representative: Horak, Michael

(57) **Abstract**

A digital image capturing device with stereo image display and touch functions is provided. The digital image capturing device includes an image capturing module, a central processing unit (CPU), and a touch display module. The CPU transmits a stereo image to the touch display module. The touch display module converts the stereo image into a multi-image, and then the multi-image is synthesized into the stereo image after being perceived by eyes. When a touch body performs a touch operation on the touch display module, for example, a contact/non-contact touch, the touch display module produces a first or second motion track, and the stereo image on the touch display module changes in real time along with the first or second motion track, so as to achieve an interactive effect of a virtual stereo image during the touch operation.

## Description

### BACKGROUND OF THE INVENTION

### Field of Invention

The present invention relates to a digital image capturing device, and more particularly to a digital image capturing device with stereo image display and touch functions, which is capable of displaying a stereo image and enabling the stereo image to change accordingly upon being touched.

### Related Art

With the rapid progress of science and technology, an image capturing device has developed from a film storage mode in the early days to a digital storage mode. No matter for a digital camera or a digital video camera, high-capacity and high-definition graphics or film files can be obtained, and the effect of the shot images can be browsed in real time during shooting.

However, the image presented by the digital camera or the digital video camera is still a two-dimensional plane image, and cannot be observed from various angles. Meanwhile, a plane image cannot explicitly express the depth of field (in brief, the depth of field is a distance range in which the scene is sharply displayed on a negative after focusing, i.e., "an explicit range in front of and behind the focal point", so that the depth of field is "a distance", in which all the objects can be clearly seen). Especially when a shot object has a long distance from the front side to the back side, an inconsistence problem may easily occur.

Therefore, in order to solve the above problem, some people in this field employ a plurality of lenses to capture images of an object, and then enable the digital camera or digital video camera to display a stereo image in real time by using a stereo imaging technology.

When a plurality of lenses is used to capture images of an object, the visual parallax between the left eye and the right eye of a viewer is mainly considered, and the binocular parallax refers to an approximately 6.5 cm offset between the left eye and the right eye of the viewer in a horizontal direction. Therefore, when viewing an object, as the viewing angles of the two eyes are slightly different, the perceived image content also varies from each other, so that a plurality of lenses (at least two) is required to simulate the images perceived by the left and right eyes.

After the images are captured, a stereo imaging technology must be applied to convert digital signals through a display into images respectively perceived by the left eye and the right eye.

Recently, a naked-eye three-dimensional (3D) stereo image display method is realized through a lenticular sheet, a parallax barrier, a binocular parallax, or a slit source method.

In the parallax barrier method, the stereo sense is mainly generated by using binocular parallax. Two images obtained at different angles are respectively segmented into vertical stripes spaced apart by an equal distance, and then the left and right images are alternated and synthesized together in an interlacing manner. The even-number part of the synthesized image is the right image, and the odd-number part is the left image. However, in order to achieve the stereo effect, the light-grating stripes with light-transmissive slits and opaque barriers perpendicularly spaced from each other are disposed on the synthesized frame, and the width of the slits and barriers is consistent with the width for segmenting the left and right images. Meanwhile, the shielding effect of the barriers is utilized to restrict the left and right eyes to respectively view the left and right images, so that the images perceived by the two eyes are different from each other, so as to produce a stereo sense. It should be noted that, the barrier stripes should be spaced apart from the synthesized frame by a certain distance, so as to enable the left and right eyes to respectively view the alternated images, thereby producing a desired stereo sense.

In US Patent No. 5832325 entitled "Stereo Camera and Printing System for Stereoscopic Photography", a stereo camera is provided, which adjusts a synthesizing process of a stereo image by sensing a distance from a shot object. However, the obtained stereo image cannot be directly displayed on a camera, but has to be presented by an external stereo image device.

In US Patent No. 5715489 entitled "Stereo Camera", a reflex-type stereo camera is provided, in which a composite prism is installed to enable a user to view a stereo image through a finder of the camera. However, the displayed stereo image can only be provided as the reference for achieving the better image pickup angle or distance during shooting, instead of being presented after shooting.

In US Patent No. 20080239135 entitled "Multi-eye Image Pickup Device", a camera with multiple lenses is provided, so as to obtain a stereo image of a shot object by switching among the multiple lenses during shooting.

In US Patent No. 20080239064 entitled "Stereoscopic Image Pickup Apparatus and Method of Adjusting Optical Axis", a stereo camera having two image pickup units is provided, which can adjust the distance and angle of the lens to maintain the human face to be positioned in the center of the frame.

Moreover, in US Patent No. 20080158346 entitled "Compound Eye Digital Camera", US Patent No. 20080152214 entitled "Method and Apparatus for Generating Files and Method and Apparatus for Controlling Stereographic Image Display", and US Patent No. 20080151044 entitled "Method and Apparatus for Generating Files for Stereographic Image Display and Method and Apparatus for Controlling Stereographic Image Display", a digital camera having at least two image pickup lenses is mainly provided, in which frames captured by the image pickup lenses have some overlapping areas. After the images are captured, they are synthesized by image processing software or an image circuit into a left eye image and a right eye image, so that a stereo image can be directly seen by the eyes on a liquid crystal display (LCD) panel.

However, though the stereo image is displayed, the stereo image cannot interact with the user in the above techniques, i.e., when viewing the stereo image, the user must modify the appearance of the image or convert the angle of the image by using external input devices such as a keyboard and a mouse, thereby failing to display the stereo image in real time.

Furthermore, in the above patents, when a stereo image is displayed, the corresponding changes of the image due to being displayed cannot be presented accordingly. In other words, the stereo image can only be displayed, but after being stored, the stereo image cannot be directly presented in a plane mode. Therefore, the user cannot figure out the result of the stereo image after the image is processed through a plane output (for example, photo developing and printing).

### SUMMARY OF THE INVENTION

In order to solve the above problems, the inventor(s) has designed a novel digital image capturing device with stereo image display and touch functions after careful studies based on the long-term experience.

The present invention is directed to a digital image capturing device with stereo image display and touch functions capable of displaying a stereo image.

The present invention is also directed to a digital image capturing device with stereo image display and touch functions capable of capturing a stereo image of an object.

The present invention is further directed to a digital image capturing device with stereo image display and touch functions capable of enabling a stereo image to change accordingly when being touched.

The present invention is further directed to a digital image capturing device with stereo image display and touch functions capable of performing display switching between a stereo image and a plane image.

The present invention is further directed to a digital image capturing device with stereo image display and touch functions capable of tracking an image of an object.

The present invention is directed to a digital image capturing device with a stereo image display function capable of displaying a stereo image.

The present invention is also directed to a digital image capturing device with a stereo image display function capable of capturing a stereo image of an object.

The present invention is further directed to a digital image capturing device with a stereo image display function capable of enabling a stereo image to change accordingly when being touched.

The present invention is further directed to a digital image capturing device with a stereo image display function capable of performing display switching between a stereo image and a plane image.

The present invention is further directed to a digital image capturing device with a stereo image display function capable of tracking an image of an object.

In order to achieve the above objectives, the present invention provides a digital image capturing device with stereo image display and touch functions, which includes an image capturing module, a central processing unit (CPU), and a touch display module. The image capturing module includes a plurality of image capturing units, for capturing a plurality of external images of a predetermined object, and transmitting the captured images to the CPU. The CPU produces a stereo image of the predetermined object according to the external images.

The touch display module includes a touch panel, a stereo image converter plate, a display panel, and a motion sensing unit. The stereo image is synthesized by a stereo image synthesizing unit in the CPU, then transmitted to the touch display module, and displayed by the display panel.

The stereo image converter plate is disposed on the display panel, so that the stereo image is converted by the stereo image converter plate into a multi-image, and the multi-image is synthesized into the stereo image after being perceived by eyes.

When performing a touch motion on the touch display module, the touch body may directly contact the touch panel, and then the touch panel calculates a first motion track of the touch body, and the CPU records the change of the first motion track, so as to enable the stereo image displayed on the display panel to change along with the first motion track.

Alternatively, when performing a touch motion on the touch display module, the touch body does not need to contact the touch panel, the motion sensing unit directly records a second motion track of the touch body, and the CPU records the change of the second motion track, so as to enable the stereo image displayed on the display panel to change along with the second motion track.

Furthermore, in order to enable the image capturing units to maintain the predetermined object in the center of the frame when capturing images, the image capturing module is further provided with an image tracking unit capable of controlling the image capturing units.

In addition, the touch display module is further provided with an image switching unit electrically connected to the CPU and the stereo image converter plate. When the display panel produces the stereo image and the stereo image passes through the stereo image converter plate, the image switching unit selects a mode of the stereo image converter plate, so as to display a stereo image or a plane image.

### BRIEF DESCRIPTION OF THE DRAWINGS

FIG. 1 is a block diagram of a preferred embodiment of the present invention;
FIG. 2 is a first three-dimensional view of a preferred embodiment of the present invention;
FIG. 3 is a second three-dimensional view of a preferred embodiment of the present invention;
FIG. 4 is a schematic cross-sectional side view of a preferred embodiment of the present invention;
FIG. 5 is a first flow chart of a preferred embodiment of the present invention;
FIG. 6 is a first schematic motion diagram of a preferred embodiment of the present invention;
FIG. 7 is a second flow chart of a preferred embodiment of the present invention;
FIG. 8 is a third flow chart of a preferred embodiment of the present invention;
FIG. 9 is a second schematic motion diagram of a preferred embodiment of the present invention;
FIG. 10 is a first schematic view of an image switching operation according to a preferred embodiment of the present invention;
FIG. 11 is a second schematic view of an image switching operation according to a preferred embodiment of the present invention;
FIG. 12 is a third schematic view of an image switching operation according to a preferred embodiment of the present invention;
FIG. 13 is a fourth schematic view of an image switching operation according to a preferred embodiment of the present invention;
FIG. 14 is a first schematic front view of another preferred embodiment of the present invention;
FIG. 15 is a second schematic front view of another preferred embodiment of the present invention;
FIG. 16 is a first block diagram of still another preferred embodiment of the present invention;
FIG. 17 is a schematic cross-sectional side view of still another preferred embodiment of the present invention; and
FIG. 18 is a second block diagram of still another preferred embodiment of the present invention.

### DETAILED DESCRIPTION OF THE INVENTION

In order to make the content of the present invention more comprehensible, the present invention is described in detail below with reference to the accompanying drawings.

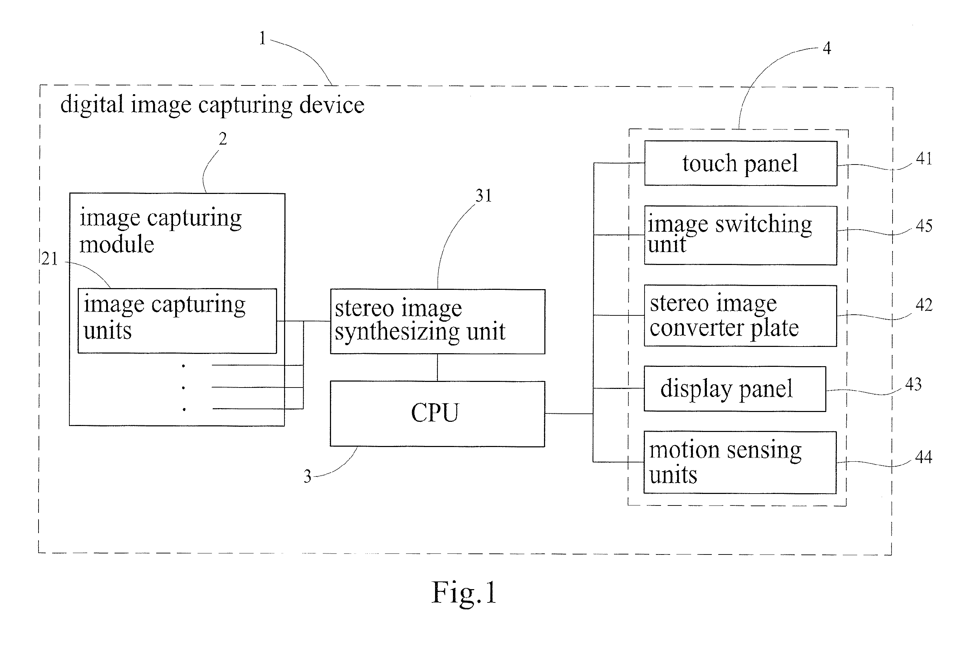

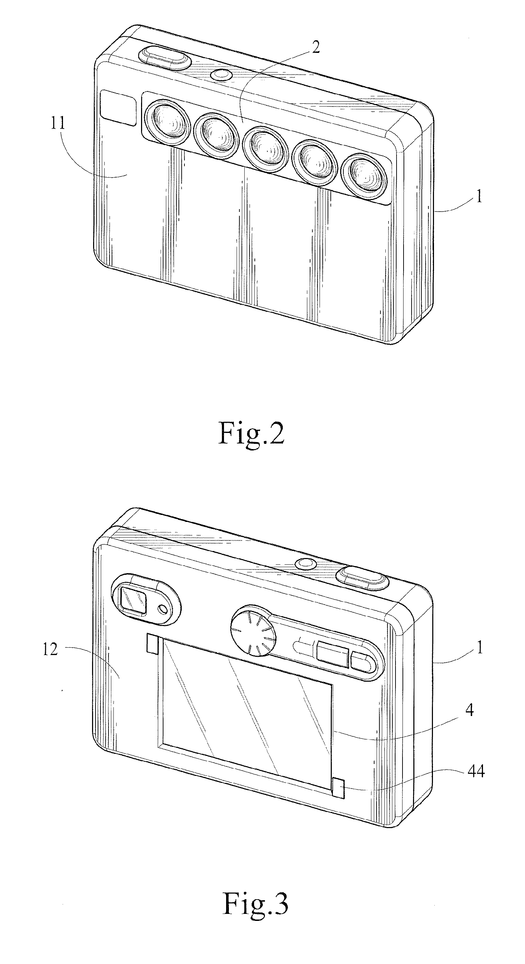

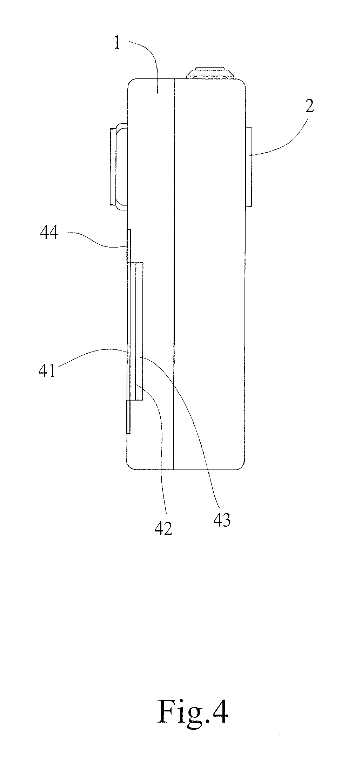

FIGs. 1, 2, 3, and 4 are respectively a block diagram, a first three-dimensional view, a second three-dimensional view, and a schematic cross-sectional side view of a preferred embodiment of the present invention. Referring to the figures, a digital image capturing device with stereo image display and touch functions in the present invention is a digital image capturing device 1, which includes an image capturing module 2, a CPU 3, and a touch display module 4. The image capturing module 2 is disposed on a first surface 11 of the digital image capturing device 1, and the touch display module 4 is disposed on a second surface 12 of the digital image capturing device 1.

The image capturing module 2 includes a plurality of image capturing units 21, for capturing a plurality of external images of a predetermined object, or capturing an appearance of a nearby object. In order to enable the captured images to produce a better stereo effect, the image capturing module 2 may be provided with three, four, or even more image capturing units 21. Generally, the image capturing units 21 are mainly charge coupled devices (CCDs) or photo-sensitive devices formed by complementary metal oxide semiconductors (CMOSs), for directly generating the external images. Specifically, when the image capturing units 21 are CCDs, the image capturing units 21 are at least selected from a group consisting of linear CCDs, interline transfer CCDs, full frame CCDs, and frame transfer CCDs according to their characteristics.

Furthermore, when the image capturing units 21 of the image capturing module 2 are disposed at positions on the first surface 11, the image capturing units 21 are horizontally arranged side by side, perpendicularly arranged side by side, arranged at corners, arranged along the sides, or arranged in parallel at even numbers.

The CPU 3 is electrically connected to each unit in the touch display module 4. The CPU 3 is mainly used for receiving the external images and synthesizing the external images into a stereo image, receiving a first or second motion track mentioned later on, and calculating changes of the stereo image according to the motion track.

For example, the stereo image is in a form of a triangle pyramid, and its tip portion points to a direct-viewing direction of the user's eyes. At this time, as the first or second motion track is from top to bottom, the triangle pyramid rotates accordingly, and a flat surface of its bottom portion faces the direct-viewing direction of the user's eyes. The above description is only an example for demonstrating the interaction relation between the stereo image and the motion track, and others motions like rotating by any angle, amplification, and horizontal or vertical movement all fall within the scope of the present invention.

Furthermore, the CPU 3 includes a stereo image synthesizing unit 31 electrically connected to the image capturing units 21 respectively, for receiving the external images transmitted by the image capturing units 21, and synthesizing the received external images into a stereo image. The stereo image synthesizing unit 31 may generate the stereo image by using a parallax barrier, binocular parallax, or slit source method. In practice, the stereo image synthesizing unit 31 is implemented in a form of an integrated circuit (IC) electrically connected to the CPU 3, or in a form of firmware recorded in the CPU 3, or in a form of software read and computed by the CPU 3, or in a form of an electronic circuit constituted by active and passive devices.

The touch display module 4 includes a touch panel 41, a display panel 43, a stereo image converter plate 42, a plurality of motion sensing units 44, and an image switching unit 45.

The touch panel 41 is electrically connected to the CPU 3, for recording a first motion track of the touch body in the touch motion. During the touch motion, the touch body directly contacts a surface of the touch panel 41, which is referred to as a contact touch. Generally, the touch panel 41 is one of a resistive touch panel, a capacitive touch panel, an infrared touch panel, an optical touch panel, and an ultrasonic touch panel. Regardless of the specific form of the touch panel 41, when the touch body contacts the touch panel 41, in addition to unidirectional motions, the first motion track also includes multi-directional motions. Taking the touch mode with fingers for example, when the index finger and the thumb both contact the touch panel 41, the touch panel 41 senses two contacts, and records the moving directions of the two contacts, in which the moving directions of the contacts may be identical or different.

The motion sensing units 44 are electrically connected to the CPU 3, for recording a second motion track of the touch body in a touch motion. During the touch motion, the touch body does not contact a surface of the touch panel 41, which is referred to as a non-contact touch. Generally, the motion sensing units 44 are mainly CCDs, and may also be infrared sensors or ultrasonic sensors for capturing appearance sensing signals of different surfaces of the touch body through infrared rays or ultrasonic waves. In practice, the so-called touch body in the present invention may be a finger, a touch pen exclusively designed for touching, or any ordinary object that can be used for touching, which all fall within the scope of the present invention.

The display panel 43 is electrically connected to the CPU 3, for receiving and displaying the stereo image transmitted by the CPU 3. The display panel 43 is one selected from a twisted nematic (TN) LCD panel, a vertical alignment (VA) LCD panel, a multi domain vertical alignment (MVA) LCD panel, a patterned vertical alignment (PVA) LCD panel, an in plane switching (IPS) LCD panel, a continuous pinwheel alignment (CPA) LCD panel, an optical compensated bend (OCB) LCD panel, an organic light emitting diode (OLED) panel, an active matrix organic light emitting diode (AMOLED) panel, a passive matrix organic light emitting diode (PMOLED) panel, a vacuum fluorescent display (VFD), a plasma display panel (PDP), a surface conduction electron-emitter (SED) display, a field emission display (FED), and an e-paper.

The stereo image converter plate 42 is disposed between the touch panel 41 and the display panel 43. When the display panel 43 generates a stereo image, the stereo image converter plate 42 receives and converts the stereo image into a multi-image, such that the stereo image is divided into images respectively received by the left eye and the right eye according to the characteristics of the eyes in receiving images. Then, the images are perceived and synthesized into the stereo image due to the parallax of the eyes. In addition, the stereo image converter plate 42 employs a light-grating structure or a lenticular sheet to divide the stereo image generated by the display panel 43 into the multi-image.

The image switching unit 45 is electrically connected to the CPU 3 and the stereo image converter plate 42 respectively, so as to control the stereo image converter plate 42 to convert the stereo image displayed by the display panel 43 between a plane mode and a stereo mode. Furthermore, the image switching unit 45 is in a form of an IC electrically connected to the CPU 3, or in a form of firmware recorded in the CPU 3, or in a form of software read and computed by the CPU 3, or in a form of an electronic circuit constituted by active and passive devices.

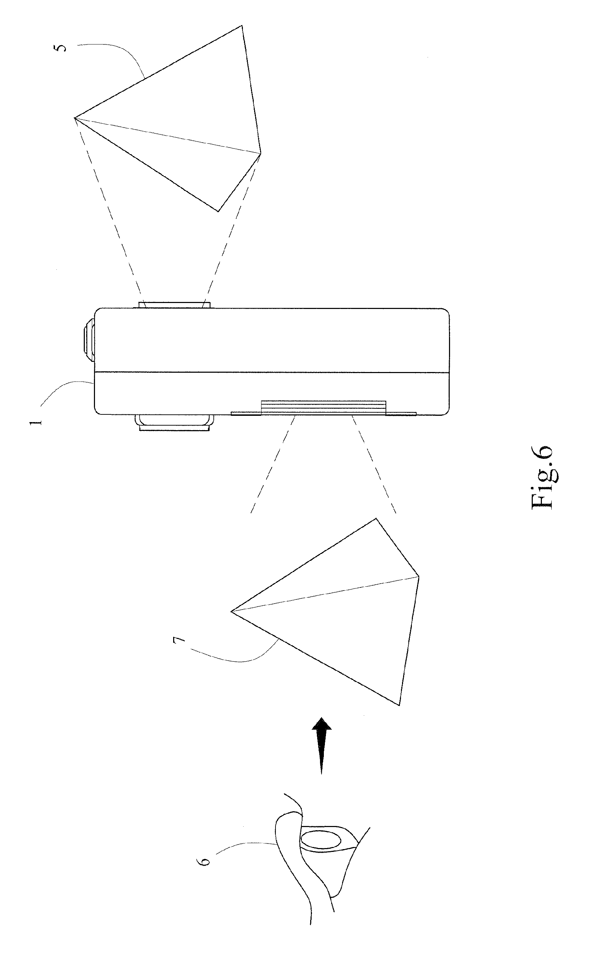

FIGs. 1, 5, and 6 are respectively a block diagram, a first flow chart, and a first schematic motion diagram of a preferred embodiment of the present invention. Referring to FIGs. 1, 5, and 6, the digital image capturing device with stereo image display and touch functions in the present invention performs a stereo imaging process in the following manner.

In Step 100, the CPU transmits a stereo image to the touch display module.

In this step, the CPU 3 transmits a predetermined stereo image to the touch display module 4, and the stereo image may be pre-stored in a predetermined storage medium, for example, a storage medium predetermined in the digital image capturing device 1. The storage medium may be a memory, a memory card, a hard disk, or an optical disk.

Alternatively, the stereo image is formed through the following manner, that is, the image capturing module 2 captures a plurality of external images of an object 5, and then the external images are synthesized by the stereo image synthesizing unit 31 into a stereo image 7.

In Step 101, the display panel of the touch display module displays the stereo image.

In Step 102, the stereo image passes through the stereo image converter plate of the touch display module.

In Step 103, the stereo image converter plate converts the stereo image into a multi-image.

In Step 104, the multi-image is perceived by eyes and produces the stereo image.

In the above steps, the display panel 43 of the touch display module 4 displays the stereo image 7 transmitted by the CPU 3 (the displaying principle of the LCD panels or other displaying technologies have been disclosed and applied for many years, and is not an appeal of the present invention, so that the details thereof are not described herein again). Meanwhile, as the stereo image converter plate 42 is stacked above the display panel 43, the stereo image 7 displayed by the display panel 43 is converted into the multi-image by the stereo image converter plate 42, such that the stereo image 7 is divided into images respectively received by the left eye and the right eye according to the characteristics of the eyes 6 in receiving images. Then, the images are perceived and synthesized into the stereo image 7 due to the parallax of the eyes 6.

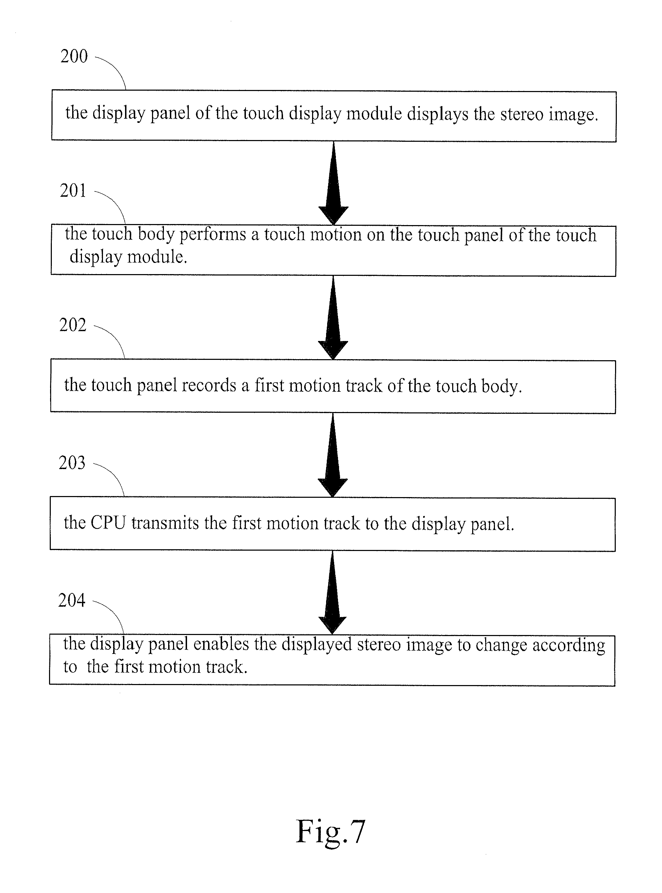

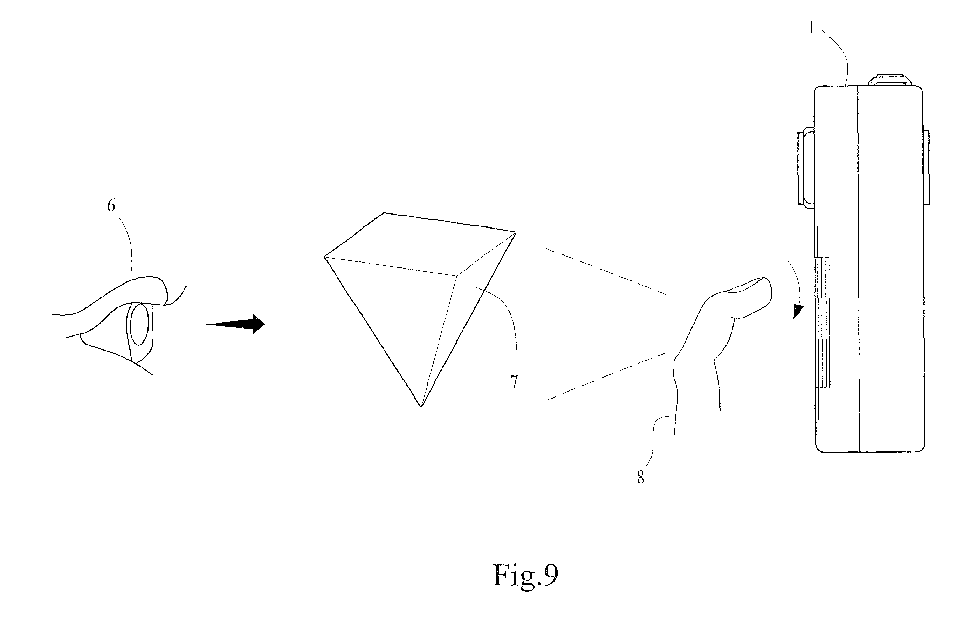

FIGs. 1, 7, and 9 are respectively a block diagram, a second flow chart, and a second schematic motion diagram of a preferred embodiment of the present invention. Referring to FIGs. 1, 7, and 9, the digital image capturing device with stereo image display and touch functions in the present invention performs a stereo imaging touch operation in the following manner.

In Step 200, the display panel of the touch display module displays the stereo image.

This step is similar to the above first flow chart, so that the details thereof are not described herein again.

In Step 201, the touch body performs a touch motion on the touch panel of the touch display module.

In the above step, the touch body 8 directly contacts the touch panel 41 of the touch display module 4, and directly performs the touch motion on a surface of the touch panel 41, which is referred to as a contact touch.

In Step 202, the touch panel records a first motion track of the touch body.

In Step 203, the CPU transmits the first motion track to the display panel.

In the above step, the touch panel 41 records the first motion track of the touch body 8 during the movement, for example, a unidirectional movement, a multi-directional movement, a linear movement, or a non-linear movement, and calculates the movement of the motion track through coordinates.

In Step 204, the display panel enables the displayed stereo image to change according to the first motion track.

In the above steps, upon receiving the first motion track, the CPU 3 matches the first motion track with a predetermined motion and enables the stereo image 7 to change according to the first motion track, and the stereo image 7 displayed by the touch display module 4 changes accordingly. For example, if the motion track is to extend from top to bottom, the stereo image 7 rotates up and down; alternatively, if the motion track is to gradually increase a distance between two contacts, the stereo image 7 is amplified accordingly. Meanwhile, the stereo image converter plate 42 divides the stereo image 7 into a multi-image, i.e., divides the stereo image into images specifically received by the left eye and images specifically received by the right eye, and the two kinds of images are synthesized into the stereo image in the brain after being perceived by the left and right eyes respectively, so as to produce a real-time motion effect of the stereo image.

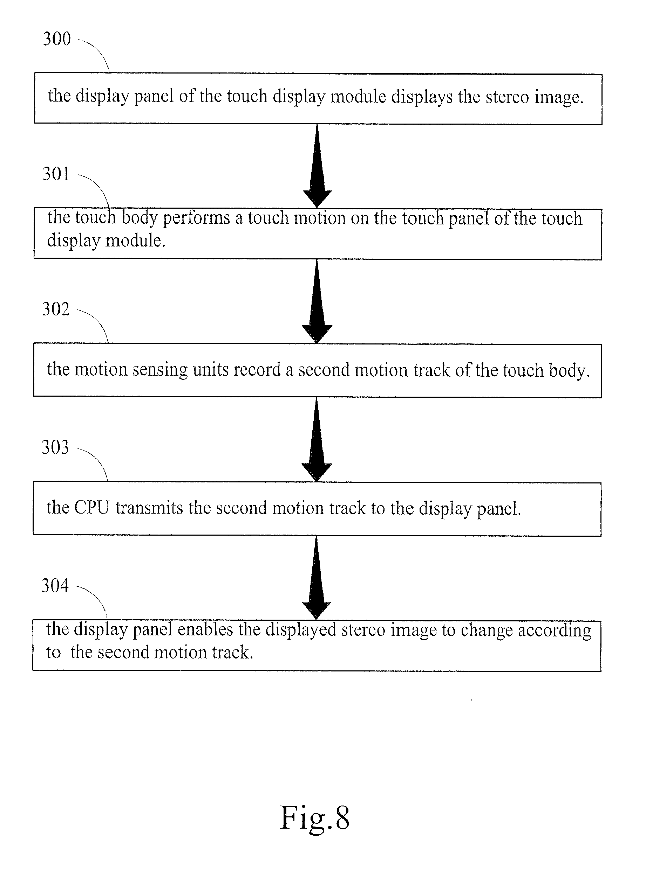

FIGs. 1, 8, and 9 are respectively a block diagram, a third flow chart, and a second schematic motion diagram of a preferred embodiment of the present invention. Referring to FIGs. 1, 8, and 9, the digital image capturing device with stereo image display and touch functions in the present invention performs a stereo imaging touch operation in the following manner.

In Step 300, the display panel of the touch display module displays the stereo image.

This step is similar to the above first flow chart, so that the details thereof are not described herein again.

In Step 301, the touch body performs a touch motion on the touch panel of the touch display module.

In this step, the touch body 8 performs the touch motion above the touch panel 41 of the touch display module 4, i.e., in a suspending state without contacting the touch panel 41, which is referred to as a non-contact touch.

In Step 302, the motion sensing units record a second motion track of the touch body.

In Step 303, the CPU transmits the second motion track to the display panel.

In the above step, the motion sensing units 44 record the second motion track of the touch body 8 during the movement, for example, a unidirectional movement, a multi-directional movement, a linear movement, or a non-linear movement, and calculate the movement of the motion track through coordinates. Considering the space, the movements of X, Y, and Z in the 3D space need to be calculated.

In Step 304, the display panel enables the displayed stereo image to change according to the second motion track.

In the above steps, upon receiving the second motion track, the CPU 3 matches the second motion track with a predetermined motion and enables the stereo image 7 to change according to the second motion track, and the stereo image 7 displayed by the display panel 43 changes accordingly. Meanwhile, the stereo image converter plate 42 divides the stereo image 7 into a multi-image, and then the multi-image is synthesized into the stereo image in the brain after being perceived by the left and right eyes respectively, so as to produce a real-time motion effect of the stereo image.

FIGs. 1, 10, 11, 12, and 13 are respectively a block diagram and first to fourth schematic views of an image switching operation according to a preferred embodiment of the present invention. Referring to FIGs. 1, 10, 11, 12, and 13, when the user displays an image on the display panel 43, the image switching unit 45 may be adopted to switch the display mode between a stereo image and a plane image. Generally, when a plane image is displayed, the image switching unit 45 generates an electric signal to enable the internal structure of the stereo image converter plate 42 to be polarized to the same direction, so that the image produced by the display panel 43 is not divided into a multi-image, but maintains the current frame displayed on the existing display panel 43.

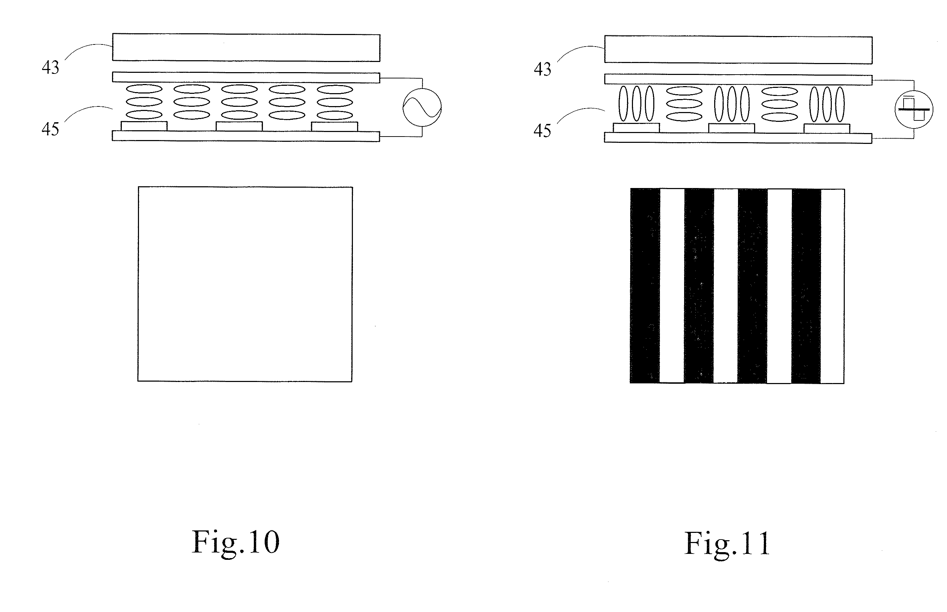

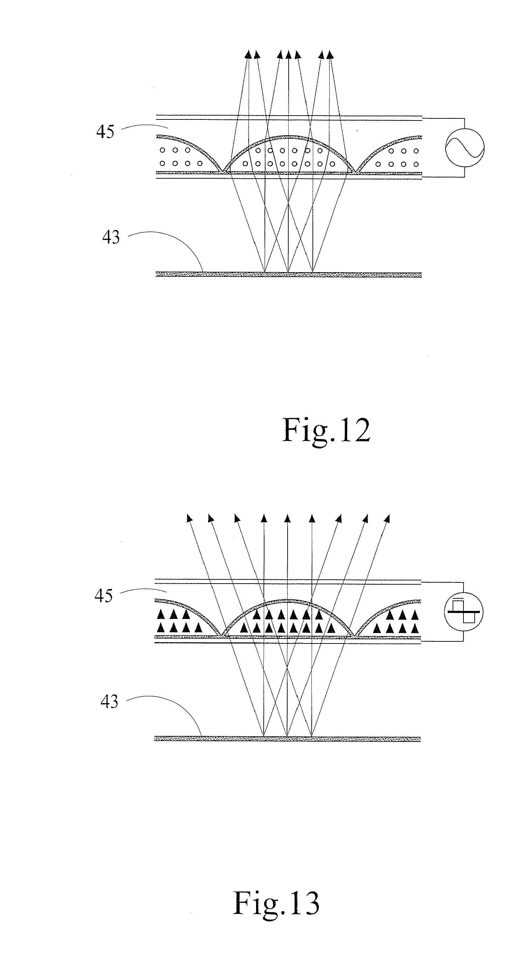

When a stereo image is displayed, the image switching unit 45 generates an electric signal to enable the internal structure of the stereo image converter plate 42 to be regularly polarized towards different directions, so that the image produced by the display panel 43 is divided into a multi-image. The above switching operation between a stereo image and a plane image is realized by an active lens in FIGs. 10 and 11, and realized by an LC barrier in FIGs. 12 and 13. Other structures such as lenticular lens or LC lens may also be used for realizing the function of switching between a stereo image and a plane image.

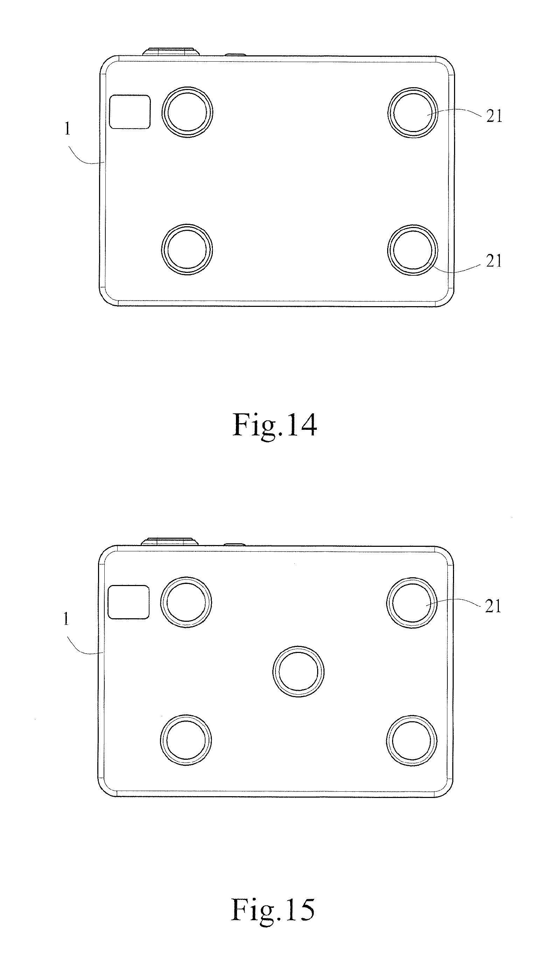

FIGs. 1, 14, and 15 are respectively a block diagram of a preferred embodiment of the present invention and first and second schematic front views of another preferred embodiment of the present invention. Referring to FIGs. 1, 14, and 15, in this embodiment, different from FIG. 1, the image capturing units 21 of the image capturing module 2 may not only be disposed on the first surface 11 of the digital image capturing device 1 in a manner of being horizontally arranged side by side in FIG. 1, but also be disposed at four corners of the first surface 11, or four, five, or even more image capturing units 21 are disposed on the first surface 11 at the same time.

In the above manner, the image capturing module 2 is enabled to achieve a better image quality on depths of field at different angles of the object when capturing the external images, so as to produce a desired stereo sense after the synthesis of the stereo image.

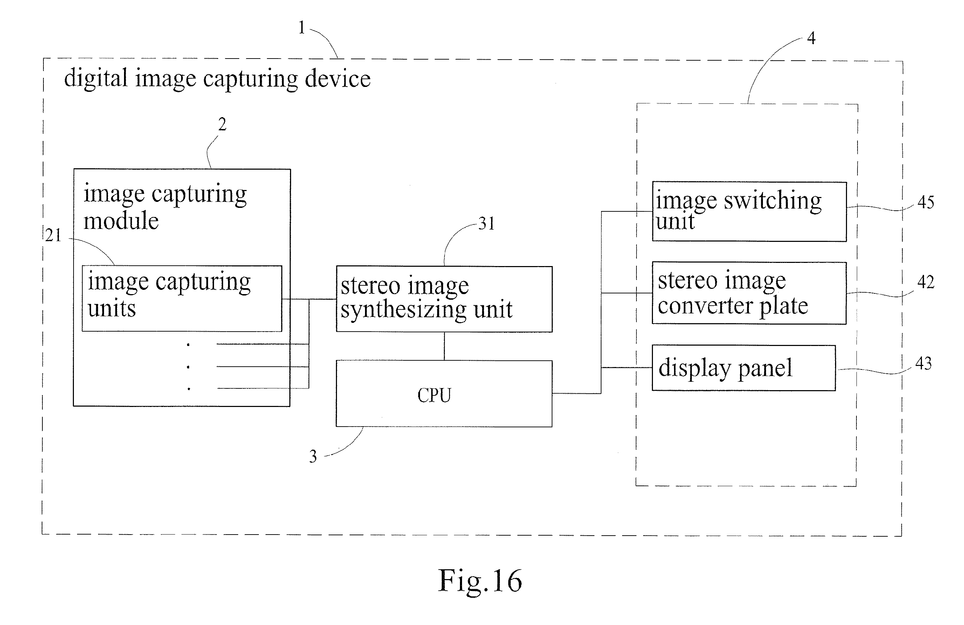

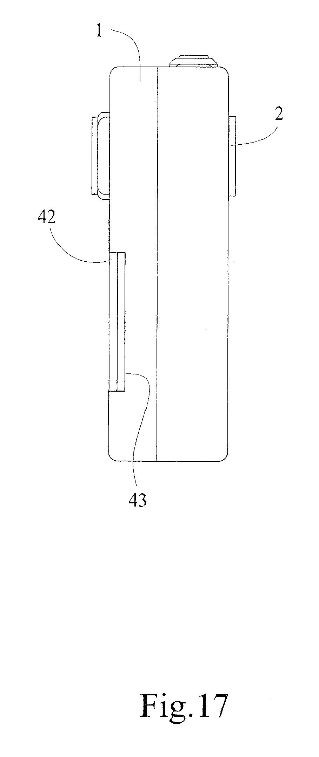

FIGs. 1, 16, and 17 are respectively a block diagram of a preferred embodiment of the present invention, and a first block diagram and a schematic cross-sectional side view of still another preferred embodiment of the present invention. Referring to FIGs. 1, 16, and 17, a digital image capturing device with a stereo image display function is provided in this embodiment, and is different from FIG. 1, in which the touch display module 4 of this embodiment is directly configured as a display module, i.e., the display module only includes the display panel 43 without any touch function.

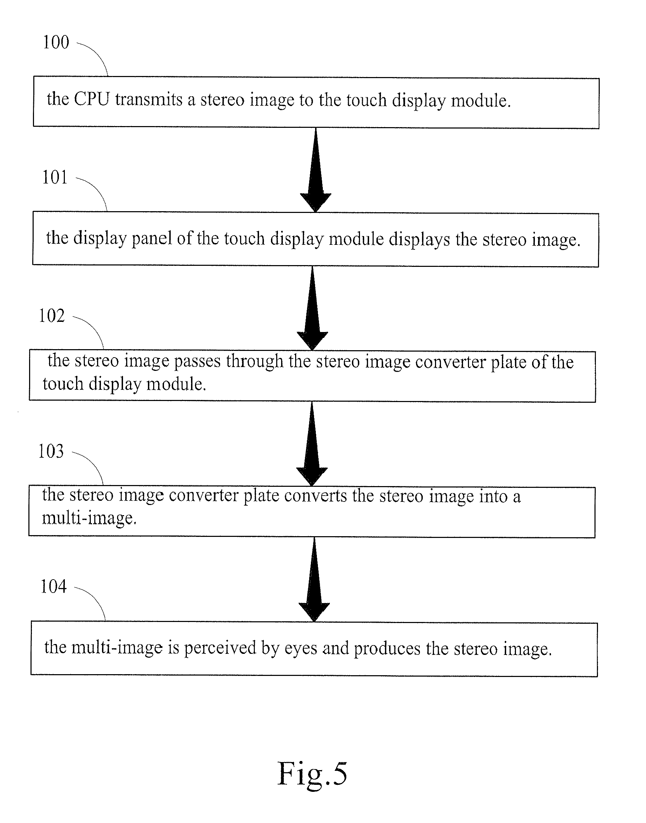

Therefore, in this embodiment, the stereo imaging process is completely the same as that in FIG. 5, but the touch display module 4 is replaced by the display module. The modified process is listed as follows (the specific implementation details are identical, which thus are not described herein again).

The CPU transmits the stereo image to the display module.

The display panel of the display module displays the stereo image.

The stereo image passes through the stereo image converter plate of the display module.

The stereo image converter plate converts the stereo image into a multi-image.

The multi-image is perceived by eyes and produces the stereo image.

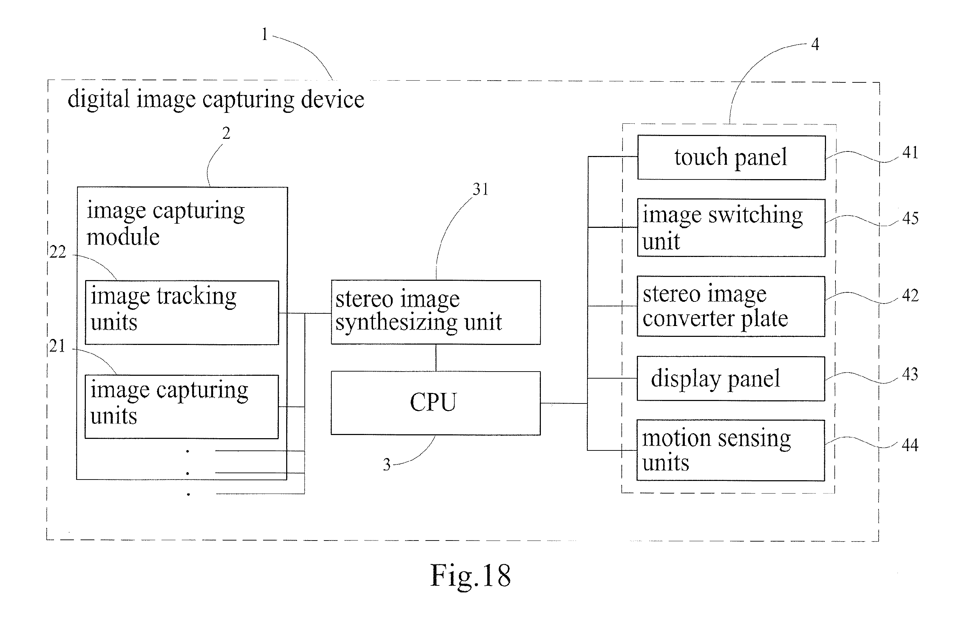

FIGs. 1 and 18 are respectively a block diagram of a preferred embodiment of the present invention and a second block diagram of still another preferred embodiment of the present invention. Referring to FIGs. 1 and 18, in this embodiment, different from FIG. 1, the image capturing module 2 is further provided with an image tracking unit 22 for controlling the image capturing units 21 to track a position of a predetermined object. Thus, during shooting, the image capturing units 21 automatically track the position of the shot object, for example, tracking the face or locating the object. When controlling the motion of the image capturing module 2, the image tracking unit 22 may employ a piezoelectric actuator, a piezoelectric motor, an ultrasonic motor, an electret, or a related miniaturized actuator to control the image capturing units 21 to steer or move forward/backward, so as to track the face or locate the object. Alternatively, the image tracking unit 22 may be configured in a form of firmware or software to directly calculate the position of the shot object in real time during shooting, for example, calculating a distance from the shot object to the border of the frame and a distance from each image capturing unit 21 to the shot object, so as to track the face or locate the object. The face tracking or object location implemented by using hardware, firmware, or software has been disclosed and applied for many years, and is not an appeal of the present invention, so that the details thereof are not described herein again.

In addition, the image tracking unit 22 is in a form of an IC electrically connected to the image capturing units 21, or in a form of firmware recorded in the image capturing units 21, or in a form of software read and computed by the CPU 3, or in a form of an electronic circuit constituted by active and passive devices.

The above descriptions are only illustrative, but not intended to limit the present invention. It is apparent to those skilled in the art that various modifications and variations can be made to the structure of the present invention without departing from the scope or spirit of the present invention. In view of the foregoing, it is intended that the present invention cover modifications and variations of the present invention provided they fall within the scope of the following claims and their equivalents.

In view of the above, the digital image capturing device with stereo image display and touch functions of the present invention has the creative step and industrial applicability, so that the present application is filed for an invention patent according to the provisions of the Patent Act.

## Claims

1. A digital image capturing device with stereo image display and touch functions, serving as a digital image capturing device for capturing an image of a predetermined object and being touched by a predetermined touch body, the digital image capturing device comprising:
an image capturing module, comprising a plurality of image capturing units, for capturing a plurality of external images of the predetermined object;
a touch display module, comprising a touch panel, a display panel, a stereo image converter plate, and an image switching unit, wherein:
the touch panel is used for recording a first motion track of the touch body during a touch motion;
the display panel is used for displaying a stereo image;
the stereo image converter plate is used for converting the stereo image into a multi-image, and the multi-image is made to generate the stereo image after being perceived by eyes; and
the image switching unit is electrically connected to the stereo image converter plate, for controlling the stereo image converter plate to convert the stereo image displayed by the display panel between a plane mode and a stereo mode; and
a central processing unit (CPU), electrically connected to the image capturing units of the image capturing module, and the touch panel, the display panel, the stereo image converter plate, and the image switching unit of the touch display module respectively, for synthesizing the external images into the stereo image and transmitting the stereo image to the display panel for being displayed, and receiving the first motion track, and enabling the display panel to display a real-time motion of the stereo image according to the motion track.

2. The digital image capturing device with stereo image display and touch functions according to claim 1, wherein the image capturing units are charge coupled devices (CCDs) or photo-sensitive devices formed by complementary metal oxide semiconductors (CMOSs).

3. The digital image capturing device with stereo image display and touch functions according to claim 1, wherein the image capturing module further comprises an image tracking unit, for controlling the image capturing units to track a position of the predetermined object.

4. The digital image capturing device with stereo image display and touch functions according to claim 3, wherein the image tracking unit is in a form of an integrated circuit (IC) electrically connected to the image capturing units, or in a form of firmware recorded in the image capturing units, or in a form of software read and computed by the CPU, or in a form of an electronic circuit constituted by active and passive devices.

5. The digital image capturing device with stereo image display and touch functions according to claim 1, wherein the touch panel is one selected from a group consisting of a resistive touch panel, a capacitive touch panel, an infrared touch panel, an optical touch panel, and an ultrasonic touch panel.

6. The digital image capturing device with stereo image display and touch functions according to claim 1, wherein the stereo image converter plate is a light-grating structure or a lenticular sheet.

7. The digital image capturing device with stereo image display and touch functions according to claim 1, wherein the multi-image is at least divided into left eye images or right eye images.

8. The digital image capturing device with stereo image display and touch functions according to claim 1, wherein the CPU comprises a stereo image synthesizing unit for synthesizing the external images into the stereo image.

9. The digital image capturing device with stereo image display and touch functions according to claim 8, wherein the stereo image synthesizing unit synthesizes the stereo image by using a parallax barrier, binocular parallax, or slit source method.

10. The digital image capturing device with stereo image display and touch functions according to claim 8, wherein the stereo image synthesizing unit is in a form of an IC electrically connected to the CPU, or in a form of firmware recorded in the CPU, or in a form of software read and computed by the CPU, or in a form of an electronic circuit constituted by active and passive devices.

11. The digital image capturing device with stereo image display and touch functions according to claim 1, wherein the touch panel of the touch display module is stacked on the stereo image converter plate, and the stereo image converter plate is stacked on the display panel, so that the stereo image displayed by the display panel passes through the stereo image converter plate.

12. The digital image capturing device with stereo image display and touch functions according to claim 1, wherein the display panel is one selected from a group consisting of a twisted nematic (TN) LCD panel, a vertical alignment (VA) LCD panel, a multi domain vertical alignment (MVA) LCD panel, a patterned vertical alignment (PVA) LCD panel, an in plane switching (IPS) LCD panel, a continuous pinwheel alignment (CPA) LCD panel, an optical compensated bend (OCB) LCD panel, an organic light emitting diode (OLED) panel, an active matrix organic light emitting diode (AMOLED) panel, a passive matrix organic light emitting diode (PMOLED) panel, a vacuum fluorescent display (VFD), a plasma display panel (PDP), a surface conduction electron-emitter (SED) display, a field emission display (FED), and an e-paper.

13. The digital image capturing device with stereo image display and touch functions according to claim 1, wherein the first motion track is a contact motion track produced when the touch body contacts the touch panel during the touch motion.

14. The digital image capturing device with stereo image display and touch functions according to claim 1, wherein the touch display module further comprises a plurality of motion sensing units, for recording a second motion track of the touch body during a touch motion.

15. The digital image capturing device with stereo image display and touch functions according to claim 14, wherein the second motion track is a non-contact motion track produced when the touch body does not contact the touch panel during the touch motion.

16. The digital image capturing device with stereo image display and touch functions according to claim 14, wherein the motion sensing units are CCDs or photo-sensitive devices formed by CMOSs.

17. The digital image capturing device with stereo image display and touch functions according to claim 14, wherein the motion sensing units are infrared sensors for generating appearance sensing signals of different surfaces of the touch body, and the CPU synthesizes the signals into the second motion track.

18. The digital image capturing device with stereo image display and touch functions according to claim 14, wherein the motion sensing units are ultrasonic sensors for generating appearance sensing signals of different surfaces of the touch body, and the CPU synthesizes the signals into the second motion track.

19. The digital image capturing device with stereo image display and touch functions according to claim 1, wherein the image capturing module is disposed on a first surface of the digital image capturing device, and the touch display module is disposed on a second surface of the digital image capturing device.

20. The digital image capturing device with stereo image display and touch functions according to claim 19, wherein the image capturing units of the image capturing module are disposed at positions on the first surface in a manner of being horizontally arranged side by side, perpendicularly arranged side by side, arranged at corners, arranged along sides, arranged in parallel at even numbers, and any combination thereof.

21. The digital image capturing device with stereo image display and touch functions according to claim 1, wherein the digital image capturing device is a digital camera or a digital video camera.

22. The digital image capturing device with stereo image display and touch functions according to claim 1, wherein the stereo image converter plate controlled by the image switching unit has a structure selected from a group consisting of an active lens structure, a lenticular lens structure, an LC lens structure, and an LC barrier structure.

23. The digital image capturing device with stereo image display and touch functions according to claim 1, wherein the image switching unit is in a form of an IC electrically connected to the CPU, or in a form of firmware recorded in the CPU, or in a form of software read and computed by the CPU, or in a form of an electronic circuit constituted by active and passive devices.

24. The digital image capturing device with stereo image display and touch functions according to claim 1, wherein the touch display module performs a stereo imaging process in the following manner:
transmitting the stereo image to the touch display module by the CPU;
displaying the stereo image by the display panel of the touch display module;
letting the stereo image pass through the stereo image converter plate of the touch display module;
converting the stereo image into the multi-image by the stereo image converter plate; and
perceiving the multi-image by eyes to generate the stereo image.

25. The digital image capturing device with stereo image display and touch functions according to claim 24, wherein the image capturing module captures a plurality of external images of the object, and then the external images are synthesized by the CPU into the stereo image.

26. The digital image capturing device with stereo image display and touch functions according to claim 24, wherein the stereo image is pre-stored in the digital image capturing device.

27. The digital image capturing device with stereo image display and touch functions according to claim 1, wherein the digital image capturing device performs a stereo imaging touch operation in the following manner:
displaying the stereo image by the display panel of the touch display module;
performing a touch motion on the touch panel of the touch display module by the touch body;
recording the first motion track of the touch body by the touch panel;
transmitting the first motion track to the display panel by the CPU; and
enabling the displayed stereo image to change according to the first motion track by the display panel.

28. The digital image capturing device with stereo image display and touch functions according to claim 27, wherein the first motion track is a contact motion track produced when the touch body contacts the touch panel during the touch motion.

29. The digital image capturing device with stereo image display and touch functions according to claim 14, wherein the touch display module performs a stereo imaging touch operation in the following manner:
displaying the stereo image by the display panel of the touch display module;
performing a touch motion on the touch panel of the touch display module by the touch body;
recording the second motion track of the touch body by the motion sensing units;
transmitting the second motion track to the display panel by the CPU; and
enabling the displayed stereo image to change according to the second motion track by the display panel.

30. The digital image capturing device with stereo image display and touch functions according to claim 29, wherein the second motion track is a non-contact motion track produced when the touch body does not contact the touch panel during the touch motion.

31. The digital image capturing device with stereo image display and touch functions according to claim 1, wherein the image capturing module further comprises an image tracking unit, for controlling the image capturing units to track a position of the predetermined object.

32. The digital image capturing device with stereo image display and touch functions according to claim 31, wherein the image tracking unit is in a form of an IC electrically connected to the image capturing units, or in a form of firmware recorded in the image capturing units, or in a form of software read and computed by the CPU, or in a form of an electronic circuit constituted by active and passive devices.

33. A digital image capturing device with a stereo image display function, serving as a digital image capturing device for capturing an image of a predetermined object, the digital image capturing device comprising:
an image capturing module, at least comprising four or more horizontally-arranged image capturing units, for capturing a plurality of external images of the predetermined object;
a display module, comprising a display panel, a stereo image converter plate, and an image switching unit, wherein:
the display panel is used for displaying a stereo image;
the stereo image converter plate is used for converting the stereo image into a multi-image, and the multi-image is made to generate the stereo image after being perceived by eyes; and
the image switching unit is electrically connected to the stereo image converter plate, for controlling the stereo image converter plate to convert the stereo image displayed by the display panel between a plane mode and a stereo mode; and
a central processing unit (CPU), electrically connected to the image capturing units of the image capturing module, and the display panel, the stereo image converter plate, and the image switching unit of the display module respectively, for synthesizing the external images into the stereo image and transmitting the stereo image to the display panel for being displayed.

34. The digital image capturing device with a stereo image display function according to claim 33, wherein the image capturing units are charge coupled devices (CCDs) or photo-sensitive devices formed by complementary metal oxide semiconductors (CMOSs).

35. The digital image capturing device with a stereo image display function according to claim 33, wherein the stereo image converter plate is a light-grating structure or a lenticular sheet.

36. The digital image capturing device with a stereo image display function according to claim 33, wherein the multi-image is at least divided into left eye images or right eye images.

37. The digital image capturing device with a stereo image display function according to claim 33, wherein the CPU comprises a stereo image synthesizing unit for synthesizing the external images into the stereo image.

38. The digital image capturing device with a stereo image display function according to claim 37, wherein the stereo image synthesizing unit synthesizes the stereo image by using a parallax barrier, binocular parallax, or slit source method.

39. The digital image capturing device with a stereo image display function according to claim 37, wherein the stereo image synthesizing unit is in a form of an integrated circuit (IC) electrically connected to the CPU, or in a form of firmware recorded in the CPU, or in a form of software read and computed by the CPU, or in a form of an electronic circuit constituted by active and passive devices.

40. The digital image capturing device with a stereo image display function according to claim 33, wherein the stereo image converter plate of the display module is stacked on the display panel, so that the stereo image displayed by the display panel passes through the stereo image converter plate.

41. The digital image capturing device with a stereo image display function according to claim 33, wherein the display panel is one selected from a group consisting of a twisted nematic (TN) LCD panel, a vertical alignment (VA) LCD panel, a multi domain vertical alignment (MVA) LCD panel, a patterned vertical alignment (PVA) LCD panel, an in plane switching (IPS) LCD panel, a continuous pinwheel alignment (CPA) LCD panel, an optical compensated bend (OCB) LCD panel, an organic light emitting diode (OLED) panel, an active matrix organic light emitting diode (AMOLED) panel, a passive matrix organic light emitting diode (PMOLED) panel, a vacuum fluorescent display (VFD), a plasma display panel (PDP), a surface conduction electron-emitter (SED) display, a field emission display (FED), and an e-paper.

42. The digital image capturing device with a stereo image display function according to claim 33, wherein the image capturing module is disposed on a first surface of the digital image capturing device, and the display module is disposed on a second surface of the digital image capturing device.

43. The digital image capturing device with a stereo image display function according to claim 33, wherein the digital image capturing device is a digital camera or a digital video camera.

44. The digital image capturing device with a stereo image display function according to claim 33, wherein the stereo image converter plate controlled by the image switching unit has a structure selected from a group consisting of an active lens structure, a lenticular lens structure, an LC lens structure, and an LC barrier structure.

45. The digital image capturing device with a stereo image display function according to claim 33, wherein the image switching unit is in a form of an IC electrically connected to the CPU, or in a form of firmware recorded in the CPU, or in a form of software read and computed by the CPU, or in a form of an electronic circuit constituted by active and passive devices.

46. The digital image capturing device with a stereo image display function according to claim 33, wherein the display module performs a stereo imaging process in the following manner:
transmitting the stereo image to the display module by the CPU;
displaying the stereo image by the display panel of the display module;
letting the stereo image pass through the stereo image converter plate of the display module;
converting the stereo image into a multi-image by the stereo image converter plate; and
perceiving the multi-image by eyes to generate the stereo image.

47. The digital image capturing device with a stereo image display function according to claim 46, wherein the image capturing module captures a plurality of external images of the object, and then the external images are synthesized by the CPU into the stereo image.

48. The digital image capturing device with a stereo image display function according to claim 46, wherein the stereo image is pre-stored in the digital image capturing device.
